# EUROPÄISCHE PATENTSCHRIFT

(11) **EP 3 584 468 B1**
(45) Veröffentlichungstag und Bekanntmachung des Hinweises auf die Patenterteilung: **04.11.2020**
(21) Anmeldenummer: 18178888.6
(22) Anmeldetag: 20.06.2018
(51) Int. Cl.: F16H 57/02, F16H 57/033, F16H 57/038

(54) **BAUKASTEN FÜR DIE HERSTELLUNG VON SERVOMOTORSYSTEMEN**
KIT FOR PRODUCING SERVOMOTOR SYSTEMS
SYSTÈME MODULAIRE DESTINÉ À LA FABRICATION DE SYSTÈMES DE SERVOMOTEUR

(43) Veröffentlichungstag der Anmeldung: 25.12.2019
(73) Patentinhaber: Heidrive GmbH, 93309 Kelheim (DE)
(72) Erfinder: PIRTHAUER, Helmut, 93309 Kelheim (DE)
(74) Vertreter: Manitz Finsterwald Patent- und Rechtsanwaltspartnerschaft mbB

(56) Entgegenhaltungen:
- DE-A1-102014 010 154
- DE-T2- 60 131 435
- JP-A- 2008 089 144

## Beschreibung

Die vorliegende Erfindung betrifft einen Baukasten für die Herstellung von Servomotorsystemen umfassend wenigstens einen Servomotor, der ein Motorgehäuse und eine drehend antreibbare Motorwelle, insbesondere eine Motor-Hohlwelle, umfasst, und wenigstens eine Getriebe-Einheit, die ein mit dem Motorgehäuse koppelbares Getriebegehäuse und eine zum Einstecken in die Motorwelle oder zum Aufstecken auf die Motorwelle ausgebildetes Getriebe-Steckelement, insbesondere eine Getriebe-Steckwelle, umfasst.

Servomotoren werden auf zahlreichen Anwendungsgebieten als elektrische Antriebe eingesetzt. Beispielsweise sind viele Laborgeräte, Werkzeugmaschinen und Roboter mit Servomotoren versehen. Im Allgemeinen weisen Servomotoren einen Sensor zur Positionsbestimmung der Motorwelle und eine elektronische Regeleinheit auf. Die Getriebe-Einheit eines Servomotorsystems dient dazu, die AusgangsDrehzahl und/oder das Ausgangs-Drehmoment an eine bestimmte Anwendungssituation anzupassen.

Servomotoren sind in verschiedenen Größen, Bauformen und Leistungsklassen erhältlich. Ebenso gibt es eine Vielzahl von Getriebe-Einheiten für Servomotoren, die sich hinsichtlich der Getriebeart, der Übersetzung und gegebenenfalls weiteren Parametern unterscheiden. Um nicht alle möglichen oder gewünschten Kombinationen von Servomotoren und Getriebe-Einheiten als fertige Systeme vorrätig halten zu müssen, verwenden Hersteller von Servomotorsystemen Baukästen der eingangs genannten Art, um je nach Vorgabe und Bedarf individuelle Gesamtsysteme zu fertigen.

Für bestimmte Anwendungen ist es gewünscht, dass die Ausgangswelle des Servomotorsystems quer zur Motorwelle ausgerichtet ist, also eine winkelige Drehmomentübertragung vorliegt. Zur Erfüllung dieser Vorgabe kann der Servomotor mit einer Winkelgetriebe-Einheit gekoppelt werden, die sowohl eine winkelige Drehmomentübertragung als auch eine vorgegebene Übersetzung bereitstellt. Problematisch ist hierbei, dass ein Hersteller von Servomotorsystemen für alle angebotenen Übersetzungen sowohl geradlinig übertragende Getriebe-Einheiten als auch Winkelgetriebe-Einheiten vorrätig halten muss, was mit hohen Lagerkosten verbunden ist. Ein weiteres Problem besteht darin, dass die bei gängigen Winkelgetriebe-Einheiten eingangsseitig vorgesehenen Klemmkupplungen im Allgemeinen nicht mit Motor-Hohlwellen koppelbar sind und daher das Bereitstellen eines Servomotors mit Motor-Vollwelle oder eines zusätzlichen Adapters erfordern.

Die DE 10 2014 010154 A1 offenbart ein Untersetzungsgetriebe, das mittels einer Adapter-artigen Verbindungseinheit mit einem Servomotor koppelbar ist.

In der JP 2008 089144 A ist ein Schwenkantrieb für Windkraftanlagen offenbart, der einen Motor und ein Getriebe umfasst.

Es ist eine Aufgabe der Erfindung, die Herstellung von Servomotorsystemen unterschiedlicher Art zu vereinfachen.

Die Lösung der Aufgabe erfolgt durch einen Baukasten mit den Merkmalen des Anspruchs 1.

Ein erfindungsgemäßer Baukasten weist wenigstens ein Winkelgetriebemodul auf, das einen mit dem Motorgehäuse koppelbaren ersten Verbindungsabschnitt und einen mit dem Getriebegehäuse koppelbaren zweiten Verbindungsabschnitt umfasst, wobei ein im Bereich des ersten Verbindungsabschnitts angeordnetes Eingangselement des Winkelgetriebemoduls ein zum Einstecken in die Motorwelle oder zum Aufstecken auf die Motorwelle ausgebildetes erstes Verbindungs-Steckelement, insbesondere eine Verbindungs-Steckwelle, ist und ein im Bereich des zweiten Verbindungsabschnitts angeordnetes Ausgangselement des Winkelgetriebemoduls ein zweites Verbindungs-Steckelement, insbesondere eine Verbindungs-Hohlwelle, ist, in welches das Getriebe-Steckelement einsteckbar oder auf welches das Getriebe-Steckelement aufsteckbar ist, und wobei das erste Verbindungs-Steckelement und das zweite Verbindungs-Steckelement um quer zueinander verlaufende Drehachsen drehbar und antriebswirksam miteinander gekoppelt sind.

Das Winkelgetriebemodul weist also eingangsseitig zumindest im Wesentlichen die gleiche Schnittstelle für die Anbindung an den Servomotor auf wie die Getriebe-Einheit und ausgangsseitig zumindest im Wesentlichen die gleiche Schnittstelle für die Anbindung an die Getriebe-Einheit wie der Servomotor. Somit kann wahlweise eine Einfügung des Winkelgetriebemoduls zwischen den Servomotor und die Getriebe-Einheit oder eine direkte Verbindung des Servomotors mit der Getriebe-Einheit vorgenommen werden. Das heißt das Winkelgetriebemodul bildet ein Vorgelege, das wie ein Baustein bedarfsweise vorgesehen werden kann. Es ist demgemäß nicht nötig, Winkelgetriebe-Einheiten in unterschiedlichen Bauformen und Übersetzungen auf Lager zu halten, weil jede vorhandene Getriebe-Einheit auf einfache und schnelle Weise mit dem Winkelgetriebemodul koppelbar ist. Bei Bedarf ist auch ein Hintereinanderschalten mehrerer Winkelgetriebemodule möglich, um beispielsweise eine Umlenkung des Übertragungspfads um 180° zu ermöglichen.

Das Koppeln einer Getriebe-Einheit mit einer Motor-Hohlwelle durch Einstecken, insbesondere Einpressen, des Wellenstummels eines Getriebeelements in die Aussparung der Hohlwelle wird auch als "Direktanbau" bezeichnet. Das Winkelgetriebemodul eines erfindungsgemäßen Baukastens ist für einen solchen Direktanbau geeignet und kommt sowohl ohne Klemmkupplung als auch ohne Zwischenflansch aus. Aufgrund des Winkelgetriebemoduls ermöglicht ein erfindungsgemäßer Baukasten eine besonders flexible und einfache Herstellung von unterschiedlichen Servomotorsystemen bei geringen Lagerkosten.

Bevorzugt ist vorgesehen, dass das Getriebe-Steckelement und das erste Verbindungs-Steckelement jeweils zum Einpressen in die Motorwelle oder zum Aufpressen auf die Motorwelle ausgebildet sind und das Getriebe-Steckelement in das zweite Verbindungs-Steckelement einpressbar oder auf dieses aufpressbar ist.

Vorzugsweise erstreckt sich eine Kopplungsebene des zweiten Verbindungsabschnitts quer, insbesondere rechtwinklig, zu einer Kopplungsebene des ersten Verbindungsabschnitts. Die Verbindungsabschnitte können flanschartig ausgeführt und/oder direkt an einem Gehäuse des Winkelgetriebemoduls ausgebildet sein.

Vorzugsweise ist vorgesehen, dass das erste Verbindungs-Steckelement eine Verbindungs-Steckwelle ist und das zweite Verbindungs-Steckelement eine Verbindungs-Hohlwelle ist, wobei die Verbindungs-Steckwelle und die Verbindungs-Hohlwelle an jeweiligen Ritzeln angeordnet sind. Es kann auch vorgesehen sein, dass das erste Verbindungs-Steckelement eine Verbindungs-Hohlwelle ist und das zweite Verbindungs-Steckelement eine Verbindungs-Steckwelle ist, wobei die Verbindungs-Steckwelle und die Verbindungs-Hohlwelle an jeweiligen Ritzeln angeordnet sind. Dies ermöglicht eine besonders einfache Konstruktion. Insbesondere kann vorgesehen sein, dass das Eingangselement des Winkelgetriebemoduls als Steckritzel ausgebildet ist und/oder dass das Ausgangselement des Winkelgetriebemoduls als Steckritzel ausgebildet ist. Gemäß einer bevorzugten Ausgestaltung sind die Verbindungs-Steckwelle und die Verbindungs-Hohlwelle einstückig mit den jeweiligen Ritzeln ausgebildet.

Die Ritzel können miteinander kämmende Kegelräder sein, die um rechtwinklig zueinander verlaufende Drehachsen drehbar in einem Gehäuse des Winkelgetriebemoduls gelagert sind. Es sind dann keine weiteren Getriebekomponenten zur winkeligen Drehmomentübertragung erforderlich, sodass sich ein einfacher Aufbau ergibt.

Bevorzugt ist vorgesehen, dass das Getriebe-Steckelement und das erste Verbindungs-Steckelement identisch gestaltet sind und/oder dass die Motorwelle und das zweite Verbindungs-Steckelement identisch gestaltet sind.

Erfindungsgemäß ist vorgesehen, dass das Getriebegehäuse einen mit dem ersten Verbindungsabschnitt identischen Kopplungsabschnitt aufweist und dass das Motorgehäuse einen mit dem zweiten Verbindungsabschnitt identischen Kopplungsabschnitt aufweist. Es ist dann sichergestellt, dass der Servomotor wahlweise direkt oder über das Winkelgetriebemodul mit der Getriebe-Einheit verbindbar ist.

Eine spezielle Ausgestaltung eines erfindungsgemäßen Baukastens sieht vor, dass mehrere Servomotoren mit identisch gestalteten Motorwellen, insbesondere Motor-Hohlwellen, vorgesehen sind, die sich hinsichtlich wenigstens eines Betriebsparameters wie der Betriebsspannung oder der Nennleistung unterscheiden, und/oder dass mehrere Getriebe-Einheiten mit identisch gestalteten Getriebe-Steckelementen, insbesondere Getriebe-Steckwellen, vorgesehen sind, die sich hinsichtlich ihrer Übersetzungen unterscheiden. Ein solcher Baukasten ermöglicht auf einfache Weise die Herstellung einer Vielzahl von unterschiedlichen Servomotorsystemen.

Vorzugsweise weist das wenigstens eine Winkelgetriebemodul eine Übersetzung zwischen etwa eins zu eins bis etwa drei zu eins, bevorzugt eine Übersetzung von eins zu eins, auf. Falls die Übersetzung eins zu eins beträgt, ist die Gesamtübersetzung eines herzustellenden Servomotorsystems nicht durch das Winkelgetriebemodul beeinflusst, was konstruktionstechnisch günstig ist. Durch Einsatz einer höheren Übersetzung können für bestimmte Anwendungen einstufige statt zweistufige Getriebe-Einheiten verwendet werden, wodurch Kosten und Bauraum gespart werden.

Die wenigstens eine Getriebe-Einheit kann ein Planetengetriebe umfassen. Dies ermöglicht eine besonders kompakte Bauweise und die Übertragung relativ hoher Drehmomente.

Vorzugsweise sind das erste Verbindungs-Steckelement und das zweite Verbindungs-Steckelement um rechtwinklig zueinander verlaufende und/oder sich kreuzende Drehachsen drehbar. Insbesondere ist es bevorzugt, dass das Winkelgetriebemodul hinsichtlich der Drehmomentübertragung eine 90°-Umlenkung bereitstellt.

Die Offenbarung betrifft auch ein nicht eigenständig beanspruchtes Servomotorsystem mit einem Servomotor, der eine drehend antreibbare Motorwelle, insbesondere eine Motor-Hohlwelle, umfasst, und mit einer Getriebe-Einheit, die ein mit der Motorwelle antriebswirksam koppelbares Eingangselement umfasst.

Zur antriebswirksamen Kopplung der Motorwelle mit dem Eingangselement der Getriebe-Einheit ist ein Winkelgetriebemodul vorgesehen, das zwischen den Servomotor und die Getriebe-Einheit eingesetzt ist, wobei ein erstes Verbindungs-Steckelement des Winkelgetriebemoduls, insbesondere eine Verbindungs-Steckwelle, in die Motorwelle eingesteckt oder auf diese aufgesteckt ist und das Eingangselement der Getriebe-Einheit ein Getriebe-Steckelement, insbesondere eine Getriebe-Steckwelle, ist, das in ein zweites Verbindungs-Steckelement des Winkelgetriebemoduls, insbesondere eine Verbindungs-Hohlwelle, eingesteckt oder auf dieses aufgesteckt ist, wobei das erste Verbindungs-Steckelement und das zweite Verbindungs-Steckelement um quer zueinander verlaufende Drehachsen drehbar und antriebswirksam miteinander gekoppelt sind. Grundsätzlich können zur antriebswirksamen Kopplung der Motorwelle mit dem Eingangselement der Getriebe-Einheit auch mehrere hintereinandergeschaltete Winkelgetriebemodule vorgesehen sein.

Ein solches Servomotorsystem ist besonders einfach und kostengünstig herstellbar, indem nämlich ein Servomotor mit vorgegebenen Eigenschaften und eine Getriebe-Einheit mit vorgegebenen Eigenschaften bereitgestellt und über das Winkelgetriebemodul oder mehrere Winkelgetriebemodule miteinander gekoppelt werden.

Die Offenbarung betrifft auch ein nicht eigenständig beanspruchtes Winkelgetriebemodul für einen Servomotor, das umfasst:
ein Modulgehäuse, das einen ersten, zur Befestigung an einem Servomotor ausgebildeten Verbindungsabschnitt und einen zweiten, zur Befestigung an einer Getriebe-Einheit ausgebildeten Verbindungsabschnitt aufweist,
ein im Bereich des ersten Verbindungsabschnitts angeordnetes Eingangselement und
ein im Bereich des zweiten Verbindungsabschnitts angeordnetes Ausgangselement, wobei das Eingangselement und das Ausgangselement um quer zueinander verlaufende Drehachsen drehbar und antriebswirksam miteinander gekoppelt sind.

Bei einem solchen Winkelgetriebemodul ist vorgesehen, dass das Eingangselement ein zum Einstecken in eine Motorwelle des Servomotors oder zum Aufstecken auf eine Motorwelle des Servomotors ausgebildetes erstes Steckelement ist und das Ausgangselement ein zu dem ersten Steckelement komplementäres zweites Steckelement ist.

Insbesondere kann das erste Steckelement eine Steckwelle und das zweite Steckelement eine Hohlwelle sein. Alternativ kann das erste Steckelement eine Hohlwelle und das zweite Steckelement eine Steckwelle sein. Eine spezielle Ausgestaltung sieht vor, dass das Eingangselement eine zum Einstecken, insbesondere Einpressen, in eine Motor-Hohlwelle des Servomotors ausgebildete Steckwelle ist und das Ausgangselement eine zu der Steckwelle komplementäre Hohlwelle ist.

Weiterbildungen der Erfindung sind in den abhängigen Ansprüchen angegeben.

Die Erfindung wird nachfolgend beispielhaft anhand der Zeichnung beschrieben.
- Fig. 1: ist eine vereinfachte, teilweise aufgeschnittene Darstellung eines gemäß dem Stand der Technik gestalteten Servomotorsystems.
- Fig. 2: ist eine vereinfachte, teilweise aufgeschnittene Darstellung eines erfindungsgemäßen Servomotorsystems.
- Fig. 3: zeigt ein Servomotorsystem, das unter Verwendung eines erfindungsgemäßen Baukastens hergestellt ist.

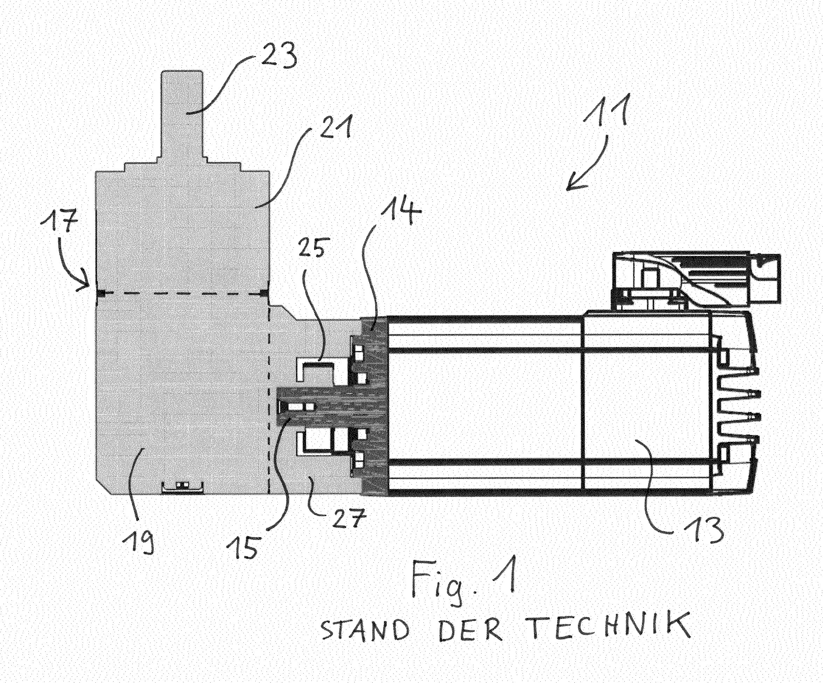

Das in Fig. 1 gezeigte, dem Stand der Technik zuzurechnende Servomotorsystem 11 umfasst einen Servomotor 13 mit einem Motorflansch 14 und einer drehend antreibbaren Motor-Vollwelle 15 sowie eine Winkelgetriebe-Einheit 17. Die Winkelgetriebe-Einheit 17 umfasst ein Winkelgetriebe 19 und ein Planetengetriebe 21, die in Fig. 1 nicht im Einzelnen dargestellt sind. Das Ausgangselement des Planetengetriebes 21 ist eine Getriebe-Vollwelle 23, die im montierten Zustand des Servomotorsystems 11 rechtwinklig zur Motor-Vollwelle 15 ausgerichtet ist. Zur antriebswirksamen Kopplung der Motor-Vollwelle 15 mit der Getriebe-Vollwelle 23 ist eine Klemmkupplung 25 vorgesehen, die in einem Eingangsabschnitt 27 der Winkelgetriebe-Einheit 17 angeordnet und beispielsweise durch einen Schraubendreher bedienbar ist.

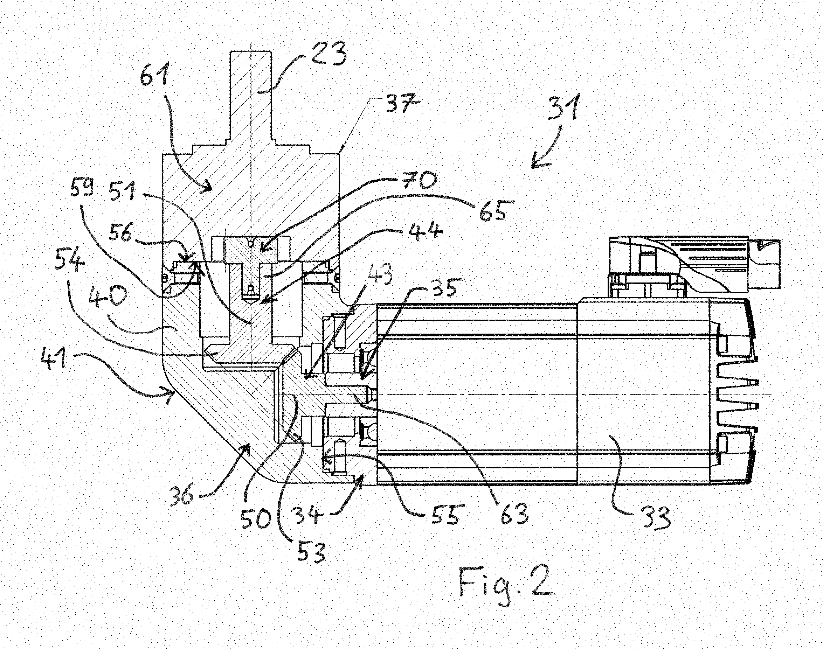

Fig. 2 zeigt ein erfindungsgemäßes Servomotorsystem 31, das einen Servomotor 33, ein Winkelgetriebemodul 36 und eine Getriebe-Einheit 37 aufweist. Der Servomotor 33 weist ein Lagerschild 34 auf, das vorzugsweise für einen Direktanbau ausgelegt ist. Im Unterschied zu dem in Fig. 1 gezeigten Servomotor 13 weist der Servomotor 31 des in Fig. 2 dargestellten Servomotorsystems 31 als Ausgangselement keine Vollwelle, sondern eine Motor-Hohlwelle 35 auf.

Das Winkelgetriebemodul 36 weist ein Modulgehäuse 40 auf, das vorzugsweise wie dargestellt eine Abschrägung 41 umfasst. In dem Modulgehäuse 40 sind ein Eingangs-Steckritzel 43 und ein Ausgangs-Steckritzel 44 um rechtwinklig zueinander verlaufende und einander kreuzende Drehachsen 50, 51 drehbar gelagert. Das Eingangs-Steckritzel 43 und das Ausgangs-Steckritzel 44 weisen jeweilige Kegelradabschnitte 53, 54 auf, die miteinander in einem Verzahnungseingriff stehen und vorzugsweise gleiche Zähnezahlen aufweisen.

An dem Modulgehäuse 40 sind ein erster Verbindungsabschnitt 55 und ein zweiter Verbindungsabschnitt 56 ausgebildet, die jeweilige, sich zumindest im Wesentlichen rechtwinklig zueinander erstreckende Kopplungsebenen definieren. Die Verbindungsabschnitte 55, 56 sind jeweils für einen Direktanbau ausgelegt, und zwar derart, dass der erste Verbindungsabschnitt 55 mit dem Lagerschild 34 lösbar koppelbar ist und der zweite Verbindungsabschnitt 56 lösbar mit einem Gehäuseabschnitt 59 der Getriebe-Einheit 37 koppelbar ist. Die Getriebe-Einheit 37 ist für eine geradlinige Drehmomentübertragung ausgebildet und weist ein in Fig. 2 nicht im Detail dargestelltes Planetengetriebe 61 sowie ein Ausgangselement in Form einer Getriebe-Vollwelle 23 auf.

Im Bereich des ersten Verbindungsabschnitts 55 ragt eine Verbindungs-Steckwelle 63 des Eingangs-Steckritzels 43 aus dem Modulgehäuse 40 hervor. Die hier als Vollwelle ausgebildete Verbindungs-Steckwelle 63 ist so gestaltet, dass sie in die Motor-Hohlwelle 35 eingesteckt werden kann, insbesondere unter Ausbildung eines Presssitzes. Der Presssitz ist vorzugsweise ausreichend fest gewählt, um die Übertragung des bestimmungsgemäßen Maximal-Drehmoments zu gewährleisten. Bei Bedarf kann die Verbindungs-Steckwelle 63 ein Formschluss-Merkmal wie z. B. eine Riffelung oder Rändelung aufweisen. Grundsätzlich könnte die Verbindungs-Steckwelle 63 auch zum Einkleben in die Motor-Hohlwelle 35 ausgebildet sein.

Das Ausgangs-Steckritzel 44 weist eine Verbindungs-Hohlwelle 65 auf, die im Bereich des zweiten Verbindungsabschnitts 56 angeordnet ist. Die Verbindungs-Hohlwelle 65 ist so gestaltet, dass eine Getriebe-Steckwelle 70 der Getriebe-Einheit 37 in sie eingesteckt werden kann, insbesondere unter Ausbildung eines Presssitzes. Der Presssitz ist wiederum vorzugsweise ausreichend fest gewählt, um die Übertragung des bestimmungsgemäßen Maximal-Drehmoments zu gewährleisten. Bei Bedarf kann die Getriebe-Steckwelle 70 ein Formschluss-Merkmal wie z. B. eine Riffelung oder Rändelung aufweisen. Ferner könnte die Getriebe-Steckwelle 70 zum Einkleben in die Verbindungs-Hohlwelle 65 ausgebildet sein.

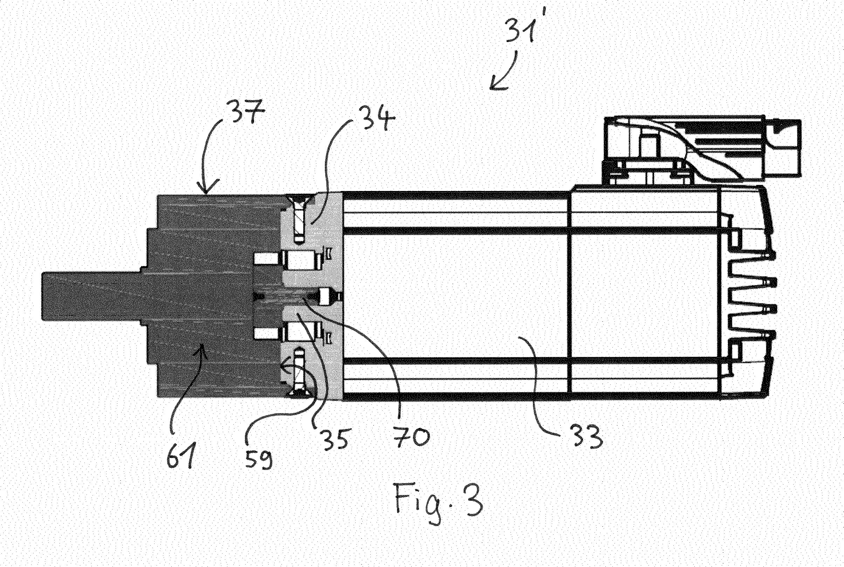

Wenn der Servomotor 33 wie in Fig. 2 dargestellt über das Winkelgetriebemodul 36 mit der Getriebe-Einheit 37 verbunden ist, weist das Servomotorsystem 31 eine rechtwinklige Drehmomentübertragung und eine durch die Getriebe-Einheit 37 vorgegebene Übersetzung auf. Das Winkelgetriebemodul 36 könnte jedoch auch weggelassen werden wie bei dem in Fig. 3 gezeigten Servomotorsystem 31', welches einen direkten Anbau der Getriebe-Einheit 37 an den Servomotor 33 vorsieht. Das heißt es ist wahlweise ein axialer oder ein winkeliger Direktanbau der Getriebe-Einheit 37 möglich.

Ein Baukasten, der mehrere Servomotoren 33 mit identisch gestalteten Motor-Hohlwellen 35, aber unterschiedlichen Größen oder Betriebsparametern aufweist, und der ferner mehrere Getriebe-Einheiten 37 mit identisch gestalteten Getriebe-Steckwellen 70, aber unterschiedlichen Übersetzungen aufweist, und der weiterhin mehrere Winkelgetriebemodule 36 aufweist, kann zur einfachen und schnellen Herstellung einer Vielzahl von unterschiedlichen Servomotorsystemen 31, 31' verwendet werden. Aufgrund der einheitlichen Direktanbau- und Steck-Schnittstellen ist es nicht nur möglich, mit ein und derselben Getriebe-Einheit 37 sowohl ein axiales Servomotorsystem 31' als auch ein winkeliges Servomotorsystem 31 herzustellen, sondern beispielsweise auch ein nicht dargestelltes Servomotorsystem mit einer 180°-Umlenkung durch Hintereinanderschalten von zwei Winkelgetriebemodulen 36.

Gemäß einer nicht dargestellten Ausführungsform der Erfindung sind die Steckverbindungen invertiert ausgeführt, das heißt der Servomotor weist eine Motor-Vollwelle anstatt einer Motor-Hohlwelle auf, die Getriebe-Einheit weist eine Getriebe-Hohlwelle anstatt einer Getriebe-Steckwelle auf, im Bereich des ersten Verbindungsabschnitts ist eine auf die Motor-Vollwelle aufsteckbare Verbindungs-Hohlwelle des Eingangs-Steckritzels vorgesehen und im Bereich des zweiten Verbindungsabschnitts ist eine in die Getriebe-Hohlwelle einsteckbare Verbindungs-Vollwelle des Ausgangs-Steckritzels vorgesehen.

Eine weitere nicht gezeigte Ausführungsform der Erfindung sieht vor, dass das Winkelgetriebemodul anstatt einer Getriebe-Hohlwelle eine Aussparung in einem Eingangsritzel oder Ausgangsritzel aufweist, in die eine passende Vollwelle des Servomotors oder der Getriebe-Einheit einsteckbar ist.

### Bezugszeichenliste

- 11: Servomotorsystem
- 13: Servomotor
- 14: Motorflansch
- 15: Motor-Vollwelle
- 17: Winkelgetriebe-Einheit
- 19: Winkelgetriebe
- 21: Planetengetriebe
- 23: Getriebe-Vollwelle
- 25: Klemmkupplung
- 27: Eingangsabschnitt
- 31, 31': Servomotorsystem
- 33: Servomotor
- 34: Lagerschild
- 35: Motor-Hohlwelle
- 36: Winkelgetriebemodul
- 37: Getriebe-Einheit
- 40: Modulgehäuse
- 41: Abschrägung
- 43: Eingangs-Steckritzel
- 44: Ausgangs-Steckritzel
- 50: Drehachse des Eingangs-Steckritzels
- 51: Drehachse des Ausgangs-Steckritzels
- 53, 54: Kegelradabschnitt
- 55: erster Verbindungsabschnitt
- 56: zweiter Verbindungsabschnitt
- 59: Gehäuseabschnitt
- 61: Planetengetriebe
- 63: Verbindungs-Steckwelle
- 65: Verbindungs-Hohlwelle
- 70: Getriebe-Steckwelle

## Patentansprüche

1. Baukasten für die Herstellung von Servomotorsystemen (31, 31') umfassend
wenigstens einen Servomotor (33), der ein Motorgehäuse und eine drehend antreibbare Motorwelle (35), insbesondere eine Motor-Hohlwelle, umfasst,
und
wenigstens eine Getriebe-Einheit (37), die ein mit dem Motorgehäuse koppelbares Getriebegehäuse und ein zum Einstecken in die Motorwelle (35) oder zum Aufstecken auf die Motorwelle (35) ausgebildetes Getriebe-Steckelement (70), insbesondere eine Getriebe-Steckwelle, umfasst,
**gekennzeichnet durch**
wenigstens ein Winkelgetriebemodul (36), das einen mit dem Motorgehäuse koppelbaren ersten Verbindungsabschnitt (55) und einen mit dem Getriebegehäuse koppelbaren zweiten Verbindungsabschnitt (56) umfasst, wobei ein im Bereich des ersten Verbindungsabschnitts (55) angeordnetes Eingangselement (43) des Winkelgetriebemoduls (36) ein zum Einstecken in die Motorwelle (35) oder zum Aufstecken auf die Motorwelle (35) ausgebildetes erstes Verbindungs-Steckelement (63), insbesondere eine Verbindungs-Steckwelle, ist und
ein im Bereich des zweiten Verbindungsabschnitts (56) angeordnetes Ausgangselement (44) des Winkelgetriebemoduls (36) ein zweites Verbindungs-Steckelement (65), insbesondere eine Verbindungs-Hohlwelle, ist, in welches das Getriebe-Steckelement (70) einsteckbar oder auf welches das Getriebe-Steckelement (70) aufsteckbar ist, und wobei das erste Verbindungs-Steckelement (63) und das zweite Verbindungs-Steckelement (65) um quer zueinander verlaufende Drehachsen (50, 51) drehbar und antriebswirksam miteinander gekoppelt sind,
wobei das Getriebegehäuse einen mit dem ersten Verbindungsabschnitt (55) identischen Kopplungsabschnitt (59) aufweist und wobei das Motorgehäuse einen mit dem zweiten Verbindungsabschnitt (56) identischen Kopplungsabschnitt (34) aufweist, so dass der Servomotor (33) wahlweise direkt oder über das Winkelgetriebemodul (36) mit der Getriebe-Einheit (37) verbindbar ist.

2. Baukasten nach Anspruch 1,
**dadurch gekennzeichnet, dass**
das erste Verbindungs-Steckelement (63) eine Verbindungs-Steckwelle ist und das zweite Verbindungs-Steckelement (65) eine Verbindungs-Hohlwelle (65) ist, oder umgekehrt, wobei die Verbindungs-Steckwelle (63, 65) und die Verbindungs-Hohlwelle (63, 65) an jeweiligen Ritzeln (43, 44) angeordnet sind.

3. Baukasten nach Anspruch 2,
**dadurch gekennzeichnet, dass**
die Ritzel (43, 44) miteinander kämmende Kegelräder sind.

4. Baukasten nach zumindest einem der vorstehenden Ansprüche,
**dadurch gekennzeichnet, dass**
das Getriebe-Steckelement (70) und das erste Verbindungs-Steckelement (63) identisch gestaltet sind und/oder dass die Motorwelle (35) und das zweite Verbindungs-Steckelement (65) identisch gestaltet sind.

5. Baukasten nach zumindest einem der vorstehenden Ansprüche,
**dadurch gekennzeichnet, dass**
mehrere Servomotoren (33) mit identisch gestalteten Motorwellen (35), insbesondere Motor-Hohlwellen, vorgesehen sind, die sich hinsichtlich wenigstens eines Betriebsparameters wie der Betriebsspannung oder der Nennleistung, unterscheiden, und/oder dass
mehrere Getriebe-Einheiten (37) mit identisch gestalteten Getriebe-Steckelementen (70), insbesondere Getriebe-Steckwellen, vorgesehen sind, die sich hinsichtlich ihrer Übersetzungen unterscheiden.

6. Baukasten nach zumindest einem der vorstehenden Ansprüche,
**dadurch gekennzeichnet, dass**
das wenigstens eine Winkelgetriebemodul (36) eine Übersetzung zwischen etwa eins zu eins bis etwa drei zu eins, bevorzugt eine Übersetzung von eins zu eins, aufweist.

7. Baukasten nach zumindest einem der vorstehenden Ansprüche,
**dadurch gekennzeichnet, dass**
die wenigstens eine Getriebe-Einheit (37) ein Planetengetriebe (61) umfasst.

8. Baukasten nach zumindest einem der vorstehenden Ansprüche,
**dadurch gekennzeichnet, dass**
das erste Verbindungs-Steckelement (63) und das zweite Verbindungs-Steckelement (65) um rechtwinklig zueinander verlaufende und/oder sich kreuzende Drehachsen (50, 51) drehbar sind.

9. Baukasten nach zumindest einem der vorstehenden Ansprüche,
**dadurch gekennzeichnet, dass**
das Getriebe-Steckelement (70) und das erste Verbindungs-Steckelement (63) jeweils zum Einpressen in die Motorwelle (35) oder zum Aufpressen auf die Motorwelle (35) ausgebildet sind und
das Getriebe-Steckelement (70) in das zweite Verbindungs-Steckelement (65) einpressbar oder auf dieses aufpressbar ist.

## Claims

1. A kit for the manufacture of servomotor systems (31, 31') comprising at least one servomotor (33) which comprises a motor housing and a rotatingly drivable motor shaft (35), in particular a hollow motor shaft, and at least one gear unit (37) which comprises a gear housing couplable to the motor housing and a plug-in gear element (70), in particular a plug-in gear shaft, configured for a plugging into the motor shaft (35) or for a plugging onto the motor shaft (35),
**characterized by**
at least one angular gear module (36) which comprises a first connection section (55) couplable to the motor housing and a second connection section (56) couplable to the gear housing,
wherein an input element (43) of the angular gear module (36) arranged in the region of the first connection section (55) is a first plug-in connection element (63), in particular a plug-in connection shaft, configured for a plugging into the motor shaft (35) or for a plugging onto the motor shaft (35) and
an output element (44) of the angular gear module (36) arranged in the region of the second connection section (56) is a second plug-in connection element (65), in particular a hollow connection shaft, into which the plug-in gear element (70) can be plugged or onto which the plug-in gear element (70) can be plugged, and wherein the first plug-in connection element (63) and the second plug-in connection element (65) are rotatably and drive-effectively coupled to one another about axes of rotation (50, 51) extending transversely to one another,
wherein the gear housing has a coupling section (59) identical to the first connection section (55), and wherein the motor housing has a coupling section (34) identical to the second connection section (56) so that the servomotor (33) is selectively couplable to the gear unit (37) in a direct manner or via the angular gear module (36).

2. A kit in accordance with claim 1,
**characterized in that**
the first plug-in connection element (63) is a plug-in connection shaft and the second plug-in connection element (65) is a hollow connection shaft (65), or vice versa, with the plug-in connection shaft (63, 65) and the hollow connection shaft (63, 65) being arranged at respective pinions (43, 44).

3. A kit in accordance with claim 2,
**characterized in that**
the pinions (43, 44) are mutually meshing bevel gears.

4. A kit in accordance with at least one of the preceding claims,
**characterized in that**
the plug-in gear element (70) and the first plug-in connection element (63) are of identical design; and/or **in that** the motor shaft (35) and the second plug-in connection element (65) are of identical design.

5. A kit in accordance with at least one of the preceding claims,
**characterized in that**
a plurality of servomotors (33) having identically designed motor shafts (35), in particular hollow motor shafts, are provided which differ with respect to at least one operating parameter such as the operating voltage or the nominal power; and/or
**in that** a plurality of gear units (37) having identically designed plug-in gear elements (70), in particular plug-in gear shafts, are provided which differ with respect to their gear ratios.

6. A kit in accordance with at least one of the preceding claims,
**characterized in that**
the at least one angular gear module (36) has a gear ratio between approximately one to one to approximately three to one, preferably a gear ratio of one to one.

7. A kit in accordance with at least one of the preceding claims,
**characterized in that**
the at least one gear unit (37) comprises a planetary gear (61).

8. A kit in accordance with at least one of the preceding claims,
**characterized in that**
the first plug-in connection element (63) and the second plug-in connection element (65) are rotatable about axes of rotation (50, 51) which extend at right angles to one another and/or which intersect one another.

9. A kit in accordance with at least one of the preceding claims,
**characterized in that**
the plug-in gear element (70) and the first plug-in connection element (63) are each configured for a pressing into the motor shaft (35) or for a pressing onto the motor shaft (35); and
**in that** the plug-in gear element (70) can be pressed into or can be pressed onto the second plug-in connection element (65).

## Revendications

1. Système modulaire pour la fabrication de systèmes de servomoteur (31, 31'), comprenant
au moins un servomoteur (33) qui comprend un carter de moteur et un arbre de moteur (35) pouvant être entraîné en rotation, en particulier un arbre de moteur creux, et
au moins un ensemble engrenage (37) qui comprend un carter d'engrenage pouvant être accouplé au carter de moteur (35) et un élément d'engrenage enfichable (70), en particulier un arbre d'engrenage enfichable, réalisé pour être enfiché dans l'arbre de moteur (35) ou pour être enfiché sur l'arbre de moteur (35),
**caractérisé par**
au moins un module d'engrenage angulaire (36) comprenant une première portion de liaison (55) qui peut être accouplée au carter de moteur et une seconde portion de liaison (56) qui peut être accouplée au carter d'engrenage,
un élément d'entrée (43) du module d'engrenage angulaire (36) disposé dans la zone de la première portion de liaison (55) étant un premier élément de liaison enfichable (63), en particulier un arbre de liaison enfichable, réalisé pour être enfiché dans l'arbre de moteur (35) ou pour être enfiché sur l'arbre de moteur (35), et
un élément de sortie (44) du module d'engrenage angulaire (36) disposé dans la zone de la seconde portion de liaison (56) étant un second élément de liaison enfichable (65), en particulier un arbre de liaison creux, dans lequel l'élément d'engrenage enfichable (70) peut être enfiché ou sur lequel l'élément d'engrenage enfichable (70) peut être enfiché, et
le premier élément de liaison enfichable (63) et le second élément de liaison enfichable (65) étant accouplés l'un à l'autre de façon mobile en rotation et efficace en termes d'entraînement autour d'axes de rotation (50, 51) s'étendant transversalement l'un par rapport à l'autre,
le carter d'engrenage présentant une portion d'accouplement (59) identique à la première portion de liaison (55) et le carter de moteur présentant une portion d'accouplement (34) identique à la seconde portion de liaison (56), de sorte que le servomoteur (33) peut être relié à l'ensemble engrenage (37) au choix soit directement soit par l'intermédiaire du module d'engrenage angulaire (36).

2. Système modulaire selon la revendication 1,
**caractérisé en ce que**
le premier élément de liaison enfichable (63) est un arbre de liaison enfichable et le second élément de liaison enfichable (65) est un arbre de liaison creux (65), ou inversement, l'arbre de liaison enfichable (63, 65) et
l'arbre de liaison creux (63, 65) étant disposés sur des pignons respectifs (43, 44).

3. Système modulaire selon la revendication 2,
**caractérisé en ce que**
les pignons (43, 44) sont des roues coniques en engrènement mutuel.

4. Système modulaire selon l'une au moins des revendications précédentes,
**caractérisé en ce que**
l'élément d'engrenage enfichable (70) et le premier élément de liaison enfichable (63) sont de conception identique et/ou **en ce que**
l'arbre de moteur (35) et le second élément de liaison enfichable (65) sont de conception identique.

5. Système modulaire selon l'une au moins des revendications précédentes,
**caractérisé en ce que**
il est prévu plusieurs servomoteurs (33) comportant des arbres de moteur (35) de conception identique, en particulier des arbres de moteur creux, qui se distinguent par au moins un paramètre de fonctionnement tel que la tension de fonctionnement ou la puissance nominale, et/ou **en ce que**
il est prévu plusieurs ensembles engrenages (37) comportant des éléments d'engrenage enfichables (70) de conception identique, en particulier des arbres d'engrenage enfichables, qui se distinguent par leurs rapports de transmission.

6. Système modulaire selon l'une au moins des revendications précédentes,
**caractérisé en ce que**
ledit au moins un module d'engrenage angulaire (36) présente un rapport de transmission compris entre environ un sur un et environ trois sur un, de préférence un rapport de transmission de un sur un.

7. Système modulaire selon l'une au moins des revendications précédentes,
**caractérisé en ce que**
ledit au moins un ensemble engrenage (37) comprend un engrenage planétaire (61).

8. Système modulaire selon l'une au moins des revendications précédentes,
**caractérisé en ce que**
le premier élément de liaison enfichable (63) et le second élément de liaison enfichable (65) sont mobiles en rotation autour d'axes de rotation (50, 51) qui s'étendent à angle droit l'un par rapport à l'autre et/ou qui se croisent.

9. Système modulaire selon l'une au moins des revendications précédentes,
**caractérisé en ce que**
l'élément d'engrenage enfichable (70) et le premier élément de liaison enfichable (63) sont réalisés chacun pour être enfoncés dans l'arbre de moteur (35) ou pour être enfoncés sur l'arbre de moteur (35), et
l'élément d'engrenage enfichable (70) peut être enfoncé dans le second élément de liaison enfichable (65) ou peut être enfoncé sur ce dernier.
